# EUROPEAN PATENT SPECIFICATION

(11) **EP 3 037 667 B1**
(45) Date of publication and mention of the grant of the patent: **23.05.2018**
(21) Application number: 14837752.6
(22) Date of filing: 11.08.2014
(51) Int. Cl.: F04C 29/02, F04C 25/02, B60T 17/02, B60T 13/52, F04C 18/344

(54) **VACUUM PUMP MECHANISM**
VAKUUMPUMPMECHANISMUS
MÉCANISME DE POMPE À VIDE

(30) Priority: 22.08.2013 JP 2013172156
(43) Date of publication of application: 29.06.2016
(73) Proprietor: Mikuni Corporation, Tokyo 101-0021 (JP)
(72) Inventor: ISHIGUCHI, Shoichi, Odawara-shi Kanagawa 250-0055 (JP); SHIBUYA, Yoshio, Odawara-shi Kanagawa 250-0055 (JP); KUMAMOTO, Masato, Odawara-shi Kanagawa 250-0055 (JP)
(74) Representative: Becker Kurig Straus
(86) International application number: PCT/JP2014/071163
(87) International publication number: WO 2015/025755

(56) References cited:
- JP-A- S5 716 294
- JP-A- 2008 157 070
- JP-B2- 5 157 885
- JP-B2- 5 195 611
- JP-U- S6 411 385

## Description

### TECHNICAL FIELD

The present invention relates to a vacuum pump mechanism.

### BACKGROUND ART

In general, there has been known a vane pump, as a vacuum pump, including a pump chamber having an approximately circular cross-section, a rotor that is rotationally driven at a position being eccentric with the circle, and a vane that is slidably attached to the rotor along the radial direction of the rotor and is rotated along with the rotor in a state of dividing a space in the pump chamber (see Patent Document 1 and Patent Document 2).

There has been known a negative pressure generating apparatus for a brake booster of a vehicle as an example of an application of such a vacuum pump. For example, a vacuum pump for a vehicle is directly fixed to a cam shaft of an engine and a rotor is rotated with a drive force of the cam shaft. A suction port of the vacuum pump is connected to the brake booster. Owing to that a negative pressure is provided to a brake master back of the booster, a depressing operation is assisted thereby when a brake pedal is depressed by a driver.

### Cited Document

### Patent Document

Patent Document 1: Japanese Patent Application Laid-Open No. 2006-226164
Patent Document 2: Japanese Patent Application Laid-Open No. 2004-11421

JP 2008/157070 A discloses a vacuum pump generating negative pressure by rotating a rotor, wherein an oil path is provided communication between an oil supply hole and a rotation slide part of the rotor. An atmosphere communication hole is provided communication between a first oil path and an atmospheric space. An oil supply pipe is moved to a communication blocking position by biasing force of a return spring during the generation of negative pressure and blocks communication between the oil path and the atmospheric space through the atmosphere communication hole. While negative pressure is not generated, the oil supply pipe is moved to an initial position with use of hydraulic pressure of the lubrication oil supplied to a pipe insertion hole and releases the blocking of the communication between the oil path and the atmospheric space through the atmosphere communication hole.

JP S64 11385 U discloses another known vacuum pump.

### SUMMARY

Since the vacuum pump for a vehicle is directly fixed to the cam shaft of the engine, the vacuum pump continues to be driven even after the negative pressure having desired magnitude is provided to the brake booster by the vacuum pump, so that a load continues to be exerted by lubricating oil to the vane and the like of the vacuum pump.

As a result, a needless drive torque occurs at the vacuum pump causing deterioration of fuel consumption.

The present invention is provided by appended claim 1. Beneficial embodiments are provided in the dependent claims. To address the above issues, an object of the present invention is to provide a vacuum pump mechanism capable of suppressing occurrence of a needless drive torque.

To achieve the abovementioned object, the present invention is provided while the following disclosure serves a better understanding thereof. Accordingly, the disclosure provides a housing including a pump chamber and a suction port that is connected to a brake booster, a rotor that is rotatable about a position being eccentric with the center of the pump chamber and is rotated with a drive force of an engine, a vane that divides the pump chamber into a plurality of spaces as being rotated with the rotor, a lubricating oil supply passage that supplies lubricating oil to the pump chamber, and an oil regulating unit capable of adjusting a quantity of lubricating oil flowing through the lubricating oil supply passage when the brake booster reaches a predetermined negative pressure.

According to the present disclosure, owing to that the oil regulating unit adjusts the quantity of lubricating oil flowing through the lubricating oil supply passage to a reduced quantity or zero when the brake booster reaches the predetermined negative pressure, a load exerted by the lubricating oil to the vane and the like of the vacuum pump can be reduced than before. Therefore, occurrence of a needless drive torque at the vacuum pump can be suppressed.

In the abovementioned structure of the present disclosure, the oil regulating unit may include a regulating valve capable of changing passage cross-section area of the lubricating oil supply passage, a drive portion that drives the regulating valve, a pressure sensor capable of detecting a pressure of the brake booster, and a control portion that controls the drive portion so that the regulating valve reduces the passage cross-section area of the lubricating oil supply passage when the pressure sensor detects that the brake booster reaches the predetermined negative pressure.

According to such a structure, when the pressure sensor detects that the brake booster reaches the predetermined negative pressure, the control portion controls the drive portion so that the regulating valve reduces passage cross-section area of the lubricating oil supply passage. Therefore, it is possible to set the quantity of lubricating oil flowing through the lubricating oil supply passage to a reduced quantity or zero easily and reliably.

Further, in the abovementioned structure of the present disclosure, the lubricating oil supply passage, the regulating valve, and the drive portion may be arranged at the engine.

According to such a structure, the lubricating oil supply passage and the oil regulating unit can be structured without modifying the vacuum pump.

Further, in the abovementioned structure of the present disclosure, the lubricating oil supply passage, the regulating valve, and the drive portion may be arranged at the housing.

According to such a structure, the lubricating oil supply passage and the oil regulating unit can be structured without modifying the engine.

Further, in the abovementioned structure of the present disclosure, it is possible to adopt the oil regulating unit including a regulating valve capable of changing passage cross-section area of the lubricating oil supply passage and a negative pressure actuator that drives the regulating valve, the negative pressure actuator is connected to a negative pressure passage that is connected to the suction port, and the negative pressure actuator drives the regulating valve, when the brake booster reaches a predetermined negative pressure, using the negative pressure, so as to reduce passage cross-section area of the lubricating oil supply passage.

According to such a structure, since the negative pressure actuator is connected to a negative pressure passage that is connected to a suction port, when the brake booster of the brake booster reaches the predetermined negative pressure, the negative pressure actuator drives the regulating valve with the negative pressure to control passage cross-section area of the lubricating oil supply passage to be reduced. Therefore, the regulating valve is not required to be controlled separately by electrical control or the like.

According to the present invention, owing to that the oil regulating unit sets the quantity of lubricating oil flowing through the lubricating oil supply passage to a reduced quantity or zero when the brake booster reaches the predetermined negative pressure, occurrence of a needless drive torque at the vacuum pump can be suppressed.

### BRIEF DESCRIPTION OF THE DRAWINGS

FIG. 1 is a perspective view illustrating a vacuum pump that structures a vacuum pump mechanism according to a first embodiment of the present disclosure for explaining the vacuum pump mechanism.
FIG. 2 is an exploded perspective view illustrating the vacuum pump of the same.
FIG. 3 is an exploded perspective view in a different direction illustrating the vacuum pump of the same.
FIG. 4 is a bottom view illustrating an interior of the vacuum pump of the same.
FIG. 5 is a sectional view of the vacuum pump mechanism of the same.
FIG. 6 is a block diagram of an oil regulating unit of the same.
FIG. 7 is a sectional view of a vacuum pump mechanism according to a second embodiment of the present disclosure.
FIG. 8 is a front view of a vacuum pump mechanism according to a third embodiment of the present disclosure for explaining the vacuum pump mechanism. FIG. 9 is a sectional view of the vacuum pump mechanism of the same.
FIG. 10 is a sectional view illustrating the vacuum pump mechanism according to the third embodiment of the present disclosure.
FIG. 11 is a block diagram of an oil regulating unit of the same.

### EMBODIMENTS OF THE DISCLOSURE

In the following, embodiments of the present disclosure will be described with reference to the drawings.

### (First Embodiment)

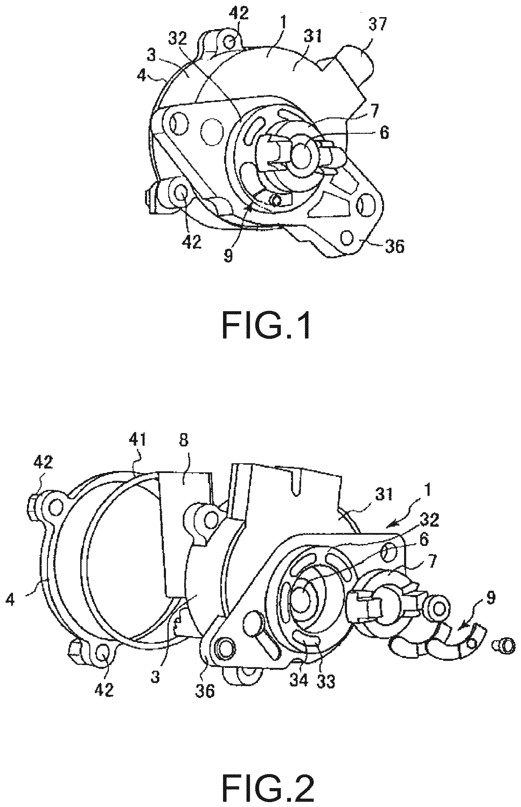

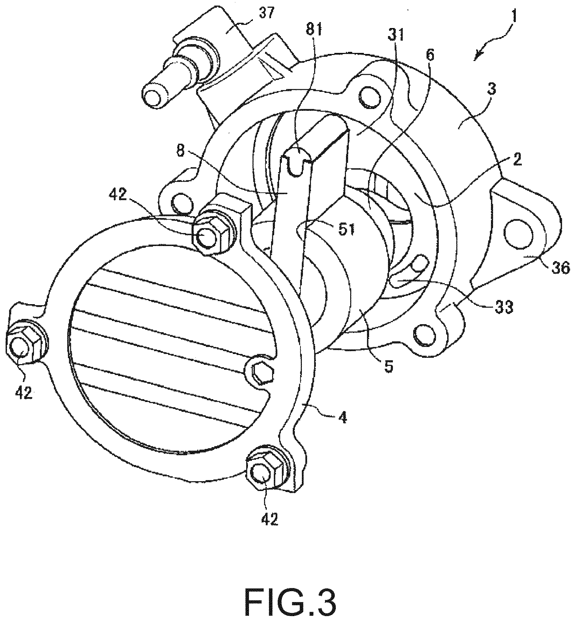

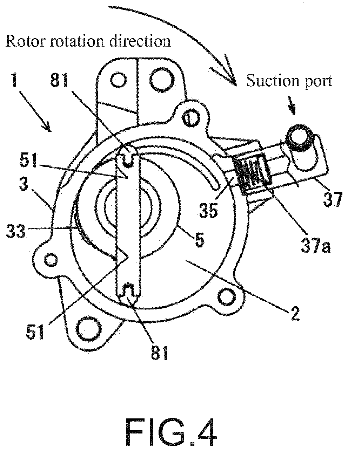

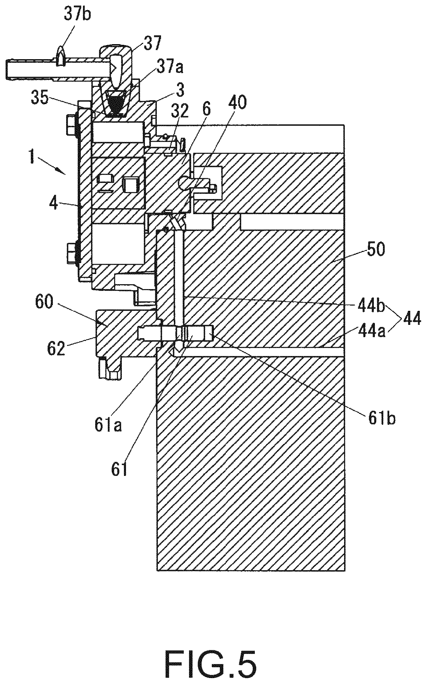

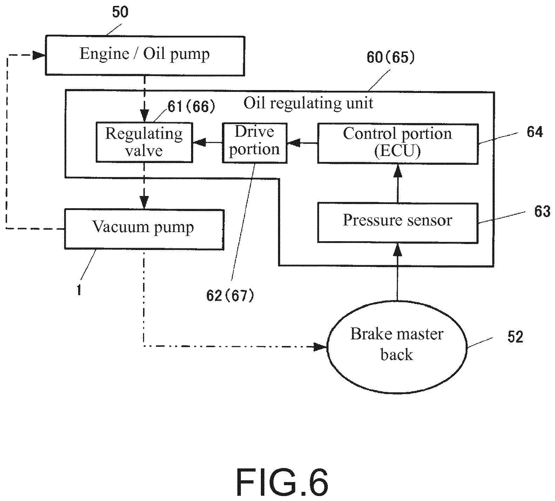

FIG. 1 is a perspective view illustrating a vacuum pump that structures a vacuum pump mechanism according to a first embodiment of the present disclosure. FIGs. 2 and 3 are exploded perspective views illustrating the vacuum pump. FIG. 4 is a bottom view illustrating an interior of the vacuum pump. FIG. 5 is a sectional view of the vacuum pump mechanism. FIG. 6 is a block diagram of an oil regulating unit.

As illustrated in FIGs. 1 to 4, a vacuum pump 1 is a vane pump including: a bottomed cylindrical housing 3 in which a pump chamber 2 is formed; a disc-shaped cover 4 that closes the housing 3; a cylindrical rotor 5 that is arranged at a position being eccentric with the center of an approximately circular cross-section of the pump chamber 2; a drive shaft 6 that rotationally drives the rotor 5; a coupling 7 that connects the drive shaft 6 to a rotor of an external drive source; and a plate-shaped vane 8 that is arranged in a state of penetrating the rotor 5 along a diameter direction of the rotor 5.

A cylindrical bearing portion 32 that surrounds a periphery of the drive shaft 6 is arranged on the side of the outer circumferential face of a bottom portion 31 of the housing 3. An approximately circular-arc-shaped (arc-shaped) discharge port 34 being an opening portion of a discharge passage 33 that penetrates the inner face of the bottom portion 31 of the housing 3 and an end face of the bearing portion 32 is arranged at the end face of the bearing portion 32. A reed valve 9 is arranged at the discharge port 34 on the end face of the bearing portion 32.

An O-ring 41 for keeping airtightness is arranged between the housing 3 and the cover 4. The housing 3 and the cover 4 are joined with bolts 42.

The cylindrical rotor 5 is arranged in the housing 3 at the eccentric position in a state that an outer circumferential face of the rotor 5 is substantially contacted to an inner circumferential face of the housing 3.

An arc-shaped opening portion of the discharge passage 33 on the side of the inner circumferential face of the bottom portion 31 is formed on the inner face of the bottom portion 31 of the housing 3 at a position being slightly on the opposite side in the rotation direction of the rotor 5 from the part where the outer circumferential face of the rotor 5 is in contact with the inner circumferential face of the housing 3 and being between the outer circumferential face of the rotor 5 and the inner circumferential face of the housing 3.

As illustrated in FIG. 4, a suction port 35 is arranged on the inner circumferential face of the housing 3 on the side in the rotation direction of the rotor 5 from the part where the outer circumferential face of the rotor 5 is in contact with the inner circumferential face of the housing 3. The suction port 35 communicates with the inside of a suction connection portion 37 that is projecting from the outer circumferential face of the housing 3. Then, the suction connection portion 37 is connected to a brake master back 52 (see FIG. 6) of a brake booster. The suction connection portion 37 includes a check valve 37a at the inside thereof so as to prevent backward flow of air from the pump chamber 2 toward the brake master back 52.

The cylindrical rotor 5 is connected to the drive shaft 6 and is rotated with a torque transmitted through the coupling 7. The drive shaft 6 is connected to a cam shaft of an engine through the coupling 7. Accordingly, the rotor 5 is rotated in a prescribed direction with a drive force of the engine through the cam shaft, the coupling 7, and the drive shaft 6.

Further, the drive shaft 6 is rotatably axially-supported by the bearing portion 32. A flange portion 36 for fixing the vacuum pump 1 is arranged outside the bearing portion 32 of the housing 3 as being laterally extended.

Two grooves 51 are formed at a cylinder portion of the cylindrical rotor 5 along the diameter direction. The vane 8 penetrates the rotor 5 as being inserted to the grooves 51, 51. Further, the vane 8 is arranged to be movable along the length direction, that is, the diameter direction of the rotor 5 in a state of penetrating the rotor 5 in the diameter direction of the rotor 5. The pump chamber 2 of the housing 3 is formed as dividing the inner circumferential side of the housing 3 and the outer circumferential side of the rotor 5. That is, the space between the inner circumferential face of the housing 3 and the outer circumferential face of the rotor 5 functions substantially as the pump chamber 2.

A cap 81 is attached to each end of the vane 8. The respective caps 81 are in contact with the inner circumferential face of the housing 3. When the vane 8 is rotated along with rotation of the rotor 5, the caps 81 are slide-contacted to the inner circumferential face of the housing 3. The pump chamber 2 is divided by the vane 8 into spaces being at the right and left of the vane 8. Since the rotor 5 is eccentric with the pump chamber 2 having an approximately circular cross-section, the vane 8 is rotated as being moved in the diameter direction with respect to the rotor 5 when the rotor 5 is rotated.

Owing to the rotation of the vane 8, air is sucked through the suction port 35 of a suction passage and air and lubricating oil are discharged through the discharge port 34 of the discharge passage 33.

As illustrated in FIG. 5, an oil supply hole 40 is formed at the housing 3. The oil supply hole 40 is opened to the inner circumferential face of the bearing portion 32 and the outer circumferential face of the drive shaft 6. A predetermined gap is formed between the bearing portion 32 and the drive shaft 6. Lubricating oil is supplied to the gap through the oil supply hole 40, and then, supplied into the pump chamber 2 from the gap.

The vacuum pump (vane pump) 1 having the abovementioned structure is directly fixed to the engine 50.

A lubricating oil supply passage 44 is connected to the oil supply hole 40 of the vacuum pump 1. The lubricating supply passage 44 is formed at the engine 50. The lubricating oil supply passage 44 includes a first lubricating oil supply passage 44a extending in parallel to a cam shaft of the engine 50 and a second lubricating oil supply passage 44b extending to the oil supply hole 40 as being perpendicular to the first lubricating oil supply passage 44a. A base end of the first lubricating oil supply passage 44a is connected to an unillustrated oil pump.

A distal end of the second lubricating oil supply passage 44b is connected to the oil supply hole 40. According to the above, lubricating oil flowing through the lubricating oil supply passages 44a, 44b is supplied to the oil supply hole 40.

The vacuum pump mechanism according to the present embodiment includes an oil regulating unit 60 capable of adjusting a quantity of lubricating oil flowing through the lubricating oil supply passage 44 when the brake booster reaches a predetermined negative pressure.

As illustrated in FIGs. 5 and 6, the oil regulating unit 60 includes: a regulating valve 61 capable of changing passage cross-section area of the second lubricating oil supply passage 44b; a drive portion 62 that drives the regulating valve 61; a pressure sensor 63 capable of detecting a pressure of the brake master back 52 of the brake booster; and a control portion 64 that controls the drive portion 62 so that the regulating valve 61 sets the passage cross-section area of the lubricating oil supply passage 44b to be reduced or to be zero when the pressure sensor 63 detects that the brake master back 52 has reached the predetermined negative pressure. The regulating valve 61 and the drive portion 62 are arranged at the engine 50.

The regulating valve 61 is formed into a rod shape. The drive portion 62 is structured with a solenoid 62. The regulating valve 61 is capable of reciprocating in the axial direction thereof with a magnetic force of the solenoid 62.

A hole 61b perpendicular to the lubricating oil supply passage 44b is formed at the engine 50. The rod-shaped regulating valve 61 is slidably inserted to the hole 61b in the axial direction thereof. A penetration portion 61a formed as a hole or a groove is formed at the regulating valve 61 in a direction perpendicular to the axial direction thereof. When the penetration portion 61a is located at the lubricating oil supply passage 44b, lubricating oil flows toward the oil supply hole 40 through the lubricating oil supply passage 44b. When the regulating valve 61 slides in the axial direction and an outer circumferential part of the regulating valve 61 other than the penetration portion 61a is located at the lubricating oil supply passage 44b, supplying of lubricating oil is discontinued. Further, owing to that the regulating valve 61 is caused to slide in the axial direction to move the penetration portion 61a laterally, the passage cross-section area of the penetration portion 61a is increased and decreased at the intersection part between the lubricating oil supply passage 44b and the hole 61b. Thus, a flow rate of lubricating oil flowing through the lubricating oil supply passage 44b can be adjusted.

The drive portion (solenoid) 62 is fixed to a side face of the engine 50. A concave portion is formed at the side face of the engine 50 and a convex portion is formed at an attaching face of the drive portion 62. The drive portion 62 is positioned and fixed to the side face of the engine 50 by fitting the convex portion to the concave portion.

The control portion 64 is arranged in an engine control unit (ECU) of an automobile. The drive portion 62 is connected to the control portion 64.

The pressure sensor 63 is connected to the control portion 64. When the pressure sensor 63 detects that the pressure of the brake master back has reached the predetermined negative pressure, the control portion 64 receives a signal thereof. Then, the control portion 64 transmits, to the drive portion 62, a signal to drive the regulating valve 61 in the axial direction to set the cross-section area of the lubricating oil supply passage 44b to be reduced or to be zero.

In the vacuum pump mechanism having the abovementioned structure, since the drive shaft 6 of the vacuum pump 1 is directly fixed to the cam shaft of the engine 50, the rotor 5 is rotated with the drive force of the cam shaft. Along with the above, the vane 8 is rotated and sucks air in the brake master back of the brake booster through the suction port 35, so that the brake master back obtains a negative pressure. When a brake pedal is depressed by a driver, the depressing operation is assisted thereby. Further, owing to that the vane 8 is rotated, lubricating oil flows through the lubricating oil supply passages 44a, 44b and is supplied to the pump chamber 2 through the oil supply hole 40 of the vacuum pump 1.

When the brake master back 52 of the brake booster reaches the predetermined negative pressure (e.g., minus one atmospheric pressure), the passage cross-section area of the lubricating oil supply passage 44b is adjusted by the oil regulating unit 60. That is, when the pressure sensor 63 of the oil regulating unit 60 detects that the pressure of the brake master back 52 has reached the predetermined negative pressure, the control portion 64 receives a signal thereof. Then, the control portion 64 transmits, to the drive portion 62, a signal to drive the regulating valve 61 in the axial direction to set the cross-section area of the lubricating oil supply passage 44b to be reduced or to be zero. Accordingly, the quantity of lubricating oil flowing through the lubricating oil supply passage 44b can be set to a reduced quantity or zero.

Thus, since lubricating oil in the pump chamber 2 can be reduced, the load exerted by the lubricating oil to the vane 8 and the like of the vacuum pump 1 can be reduced than before. Accordingly, occurrence of a needless drive torque at the vacuum pump 1 can be suppressed and fuel consumption can be improved.

Further, in the present embodiment, since the lubricating oil supply passage 44, the regulating valve 61, and the drive portion 62 are arranged at the engine 50, the lubrication oil supply passage 44 and the oil regulating unit 60 can be arranged without modifying the vacuum pump 1.

### (Second Embodiment)

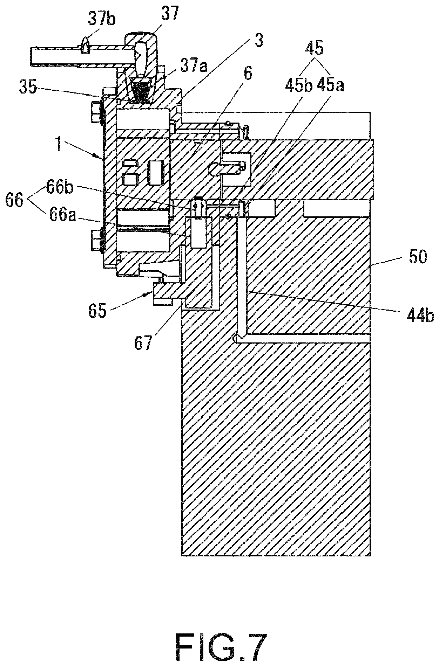

FIG. 7 is a sectional view illustrating a second embodiment. In the first embodiment, the lubricating oil supply passage 44, and the regulating valve 61 and the drive portion 62 of the oil regulating unit 60 are arranged at the engine 50. In the present embodiment, a lubricating oil supply passage 45, and a regulating valve 66 and a drive portion 67 of an oil regulating unit 65 are arranged at the housing 3 of the vacuum pump 1. Since the rest of the configuration of the vacuum pump 1 is similar to that in the first embodiment, the same reference is given to the same structural element and description thereof is simplified or skipped.

In the present embodiment, the oil regulating unit 65 includes the drive portion 67 arranged at the housing 3, the regulating valve 66, the pressure sensor 63, and the control portion 64. Here, the pressure sensor 63 and the control portion 64 are similar to those in the first embodiment.

The lubricating oil supply passage 45 includes a lubricating oil supply passage 45a connected to the lubricating oil supply passage 44b formed at the engine 50, and a lubricating oil supply passage 45b that is connected to the lubricating oil supply passage 45a and that includes an oil supply hole at a distal end thereof.

The drive portion 67 is structured with a solenoid 67 similarly to the drive portion 62. The regulating valve 66 includes a body portion 66a that is caused by the drive portion 67 to reciprocate in an up-down direction, and a slim rod-shaped valve portion 66b fixed to an upper end face of the body portion 66a.

The body portion 66a of the regulating valve 66 is caused by the drive portion 62 to reciprocate upward and downward, so that a distal end of the valve portion 66b can adjust a passage cross-section area of the oil supply hole at the distal end of the lubricating oil supply passage 45b. That is, the oil supply hole is closed by the valve portion 66b by lifting the body portion 66a, and the oil supply hole is fully opened by lowering the body portion 66a from the close position. The passage cross-section area of the oil supply hole can be adjusted by locating the valve portion 66b between the fully-open position and the close position.

The drive portion 67 that drives the regulating valve 66 is connected to the control portion 64 and controlled by the control portion 64.

The pressure senor 63 is connected to the control portion 64. When the pressure sensor 63 detects that the pressure of the brake master back 52 has reached a predetermined negative pressure, the control portion 64 receives a signal thereof. The control portion 64 transmits, to the drive portion 67, a signal to drive the regulating valve 66 upward or downward to set the cross-section area of the oil supply hole of the lubricating oil supply passage 45b to be reduc ed or to be zero. Accordingly, the quantity of lubricating oil flowing through the oil supply hole of the lubricating oil supply passage 45b can be set to a reduced quantity or zero.

Similarly to the first embodiment, in the vacuum pump mechanism of the present embodiment, when the pressure sensor 63 of the oil regulating unit 65 detects that the pressure of the brake master back 52 has reached the predetermined negative pressure, the control portion 64 receives the signal thereof. The control portion 64 transmits, to the drive portion 67, the signal to drive the regulating valve 66 upward or downward to set the passage cross-section area of the oil supply hole of the lubricating oil supply passage 45b to be reduced or to be zero. Accordingly, the passage cross-section area of the oil supply hole is set to be reduced or to be zero.

Thus, since the lubricating oil in the pump chamber 2 can be reduced, the load exerted by the lubricating oil to the vane 8 and the like of the vacuum pump 1 can be reduced than before. Accordingly, occurrence of a needless drive torque at the vacuum pump 1 can be suppressed and fuel consumption can be improved.

Further, in the present embodiment, since the lubricating oil supply passage 45, the regulating valve 61, and the drive portion 62 are arranged at the housing 3 of the vacuum pump 1, the lubricating oil supply passage 45 and the oil regulating unit 65 can be arranged without modifying the engine 50.

### (Third Embodiment)

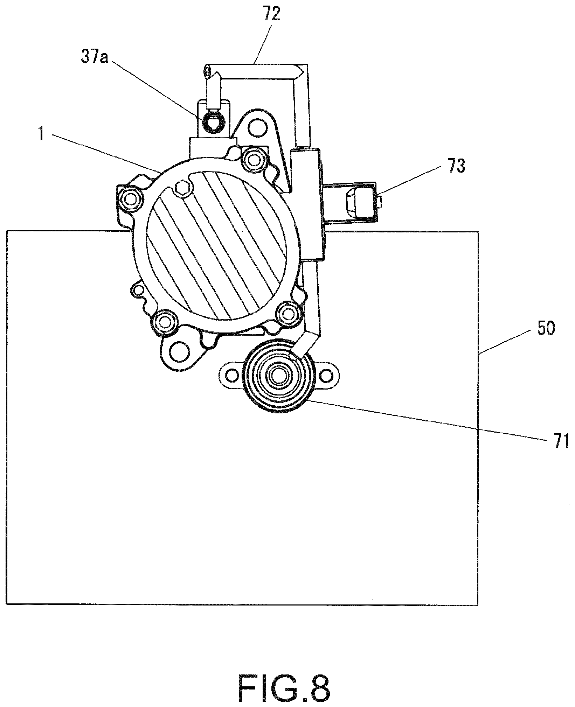

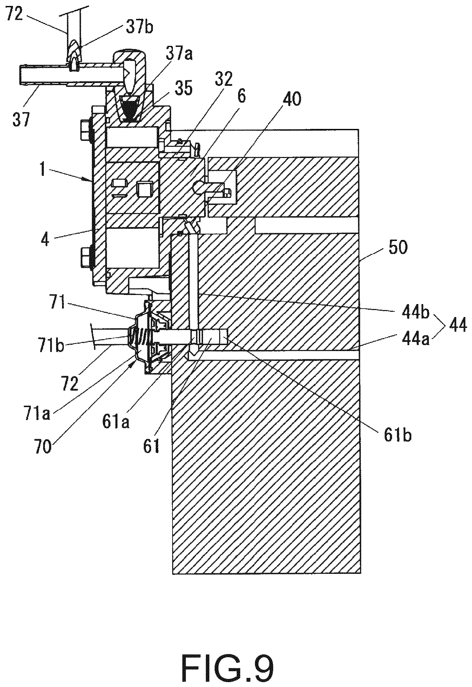

FIGs. 8 and 9 illustrate a third embodiment. FIG. 8 is a front view and FIG. 9 is a sectional view. In the first and second embodiments, the oil regulating unit 60, 65 is configured to include the regulating valve 61, 66, the drive portions 62, 67, the pressure sensor 63, 63, the control portions 64, 64, and the like. In the present embodiment, the oil regulating unit 70 is configured to include the regulating valve 61 capable of changing passage cross-section area of the lubricating oil supply passage 44b and a negative pressure actuator 71 that drives the regulating valve 61. Since the rest of the configuration of the vacuum pump 1 is similar to that in the first embodiment, the same reference is given to the same structural element and description thereof is simplified or skipped.

The negative pressure actuator 71 is connected to a negative pressure passage that is connected to the suction port 35. The suction port 35 communicates with the inside of the suction connection portion 37 protruded from the outer circumferential face of the housing 3. The suction connection portion 37 is connected to the brake master back 52 (see FIG. 6) of the brake booster with an unillustrated pipe. The negative pressure passage is structured with the pipe and the suction connection portion 37.

The suction connection portion 37 includes a bifurcation portion 37b. The bifurcation portion 37b is connected to a pipe 72 and the pipe 72 is connected to the negative pressure actuator 71. Thus, the negative pressure actuator 71 is connected to the negative pressure passage through the pipe 72.

The negative pressure actuator 71 includes a pressure chamber 71a and a spring 71b at the inside thereof. When the pressure chamber 71a is provided with a negative pressure, the regulating valve 61 is moved leftward in the axial direction thereof against an urging force of the spring 71b. Then, when the penetration portion 61a of the regulating valve 61 is located at the lubricating oil supply passage 44b, lubrication oil flows toward the oil supply hole 40 through the lubricating oil supply passage 44b.

When the negative pressure of the pressure chamber 71a is released, the regulating valve 61 is moved rightward in the axial direction thereof with the urging force of the spring 71b. When the outer circumferential part of the regulating valve 61 other than the penetration portion 61a is located at the lubricating oil supply passage 44b, supplying of lubricating oil is discontinued. Further, owing to that the regulating valve 61 is caused to slide in the axial direction to move the penetration portion 61a laterally, the passage cross-section area of the penetration portion 61a is increased and decreased at the intersection part between the lubricating oil supply passage 44b and the hole 61b. Thus, a flow rate of lubricating oil flowing through the lubricating oil supply passage 44b can be adjusted.

A switching valve 73 is arranged at a midpoint of the pipe 72. When the switching valve 73 is turned on, the brake master back 52 and the negative pressure actuator 71 are in a communicating state. When the switching valve 73 is turned off, the brake master back 52 and the negative pressure actuator 71 are in a non-communicating state. Here, the pressure of the brake master back 52 is detected by the pressure sensor 63 and the control portion 64 performs ON/OFF control of the switching valve 73 based on the detection value.

When the brake master back 52 reaches the predetermined negative pressure, the switching valve 73 is turned on and the brake master back 52 and the negative pressure actuator 71 are caused to be in the communicating state. The negative pressure actuator 71 drives (moves) the regulating valve 61 with the negative pressure, so that the passage cross-section area of the lubricating oil supply passage 44b is increased and decreased. Thus, a flow rate of lubricating oil flowing through the lubricating oil supply passage 44b can be adjusted.

In the vacuum pump mechanism of the present embodiment, the negative pressure actuator 71 is connected through the pipe 72 to the negative pressure passage that is connected to the suction port 35. Accordingly, when the brake master back 52 of the brake booster reaches the predetermined negative pressure, the negative pressure actuator 71 drives the regulating valve 61 with the negative pressure to control the passage cross-section area of the lubricating oil supply passage 44b to be reduced. Therefore, not like the first and second embodiments, the regulating valve 61 is not necessarily required to be controlled separately by electrical control or the like.

### (Fourth Embodiment)

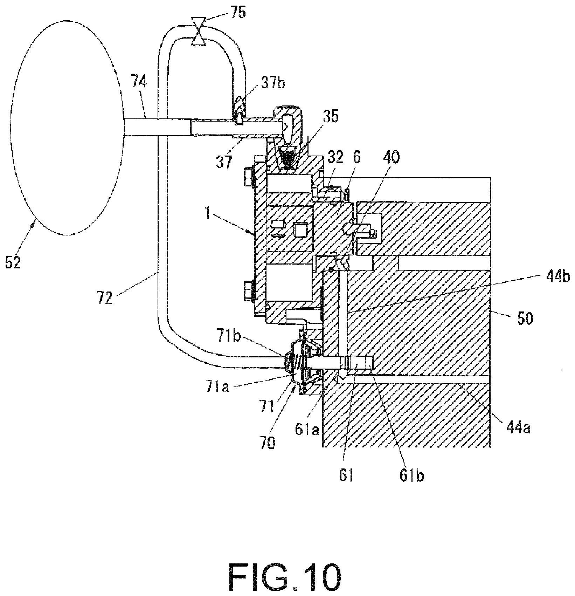

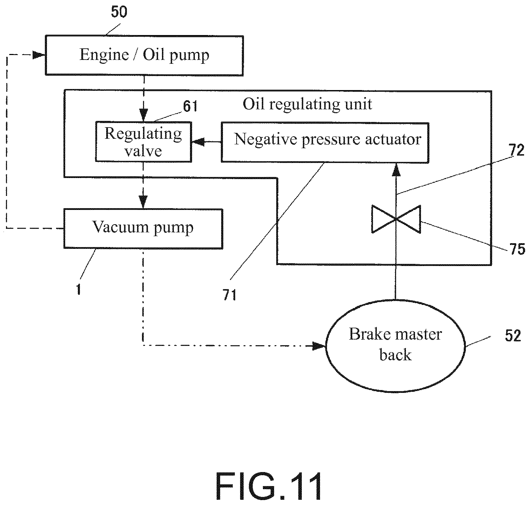

FIGs. 10 and 11 illustrate a fourth embodiment. FIG. 10 is a sectional view. FIG. 11 is a block diagram of an oil regulating unit.

In the present embodiment, the oil regulating unit is configured to include the regulating valve 61 capable of changing passage cross-section area of the lubricating oil supply passage 44b, the negative pressure actuator 71 that drives the regulating valve 61, and a restricting valve 75.

Similarly to the third embodiment, the negative pressure actuator 71 is connected to the negative pressure passage that is connected to the suction port 35. That is, the suction connection portion 37 structuring the negative pressure passage is connected to the brake master back 52 through a pipe 72, the pipe 72 is connected to the bifurcation portion 37b of the suction connection portion 37, and the pipe 72 is connected to the negative pressure actuator 71. Thus, the negative pressure actuator 71 is connected to the negative pressure passage through the pipe 72.

The restricting valve 75 is arranged at a midpoint of the pipe 72. The restricting valve 75 is arranged for reducing work of the vacuum pump by reducing the oil quantity after the brake master back 52 reliably reaches negative pressure.

When the brake master back 52 reaches the predetermined negative pressure, that is, when the negative pressure passage reaches the predetermined negative pressure, the negative pressure actuator 71 drives the regulating valve 61 with the negative pressure, so that the passage cross-section of the lubrication oil supply passage 44b is increased and decreased. Thus, a flow rate of lubrication oil flowing through the lubricating oil supply passage 44b can be adjusted.

Similarly to the third embodiment, in the vacuum pump mechanism of the present embodiment, when the brake master back 52 of the brake booster reaches the predetermined negative pressure, the negative pressure actuator 71 drives the regulating valve 61 with the negative pressure to control the passage cross-section area of the lubricating oil supply passage 44b to be reduced. Therefore, not like the first and second embodiments, the regulating valve 61 is not necessarily required to be controlled separately by electrical control or the like.

Further, in the third embodiment, the pressure of the brake master back 52 is detected by the pressure sensor 63 and the control portion 64 performs ON/OFF control of the switching valve 73 based on the detection value. However, in the present embodiment, since the negative pressure actuator 71 is operated when the negative pressure passage reaches the predetermined negative pressure with the restricting valve 75 functioning as a passage resistance of the pipe 72, the control portion 64 becomes unnecessary. Accordingly, the regulating valve 61 can be driven completely without electrical control.

## Claims

1. A vacuum pump mechanism, comprising:
a housing (3) including a pump chamber (2) and a suction port (35);
a rotor (5) that is rotatable about a position being eccentric with a center of the pump chamber (2) and is rotated with a drive force of an engine (50);
a vane (8) that divides the pump chamber (2) into a plurality of spaces as being rotated with the rotor (5);
a lubricating oil supply passage (44, 44a, 44b, 45, 45a, 45b) that supplies lubricating oil to the pump chamber (2); and
an oil regulating unit (60, 65, 70)
the vacuum pump mechanism being **characterized in that** the suction port (35) is connected to a brake booster (52) and that the oil regulating unit (60, 65, 70) is capable of adjusting a quantity of lubricating oil flowing through the lubricating oil supply passage (44, 44a, 44b, 45, 45a, 45b) to a reduced quantity or zero when the brake booster (52) reaches a predetermined negative pressure.

2. The vacuum pump mechanism according to claim 1, wherein the oil regulating unit (60) includes:
a regulating valve (61) capable of changing passage cross-section area of the lubricating oil supply passage (44b);
a drive portion (62) that drives the regulating valve (61);
a pressure sensor (63) capable of detecting a pressure of the brake booster (52); and
a control portion (64) that controls the drive portion (62) so that the regulating valve (61) reduces the passage cross-section area of the lubricating oil supply passage (44b) when the pressure sensor (63) detects that the brake booster (52) reaches the predetermined negative pressure.

3. The vacuum pump mechanism according to claim 2, wherein
the lubricating oil supply passage (44), the regulating valve (61), and the drive portion (62) are arranged at the engine (50).

4. The vacuum pump mechanism according to claim 2, wherein
the lubricating oil supply passage (45), the regulating valve (66), and the drive portion (67) are arranged at the housing (3).

5. The vacuum pump mechanism according to claim 1, wherein the oil regulating unit (70) includes:
a regulating valve (61) capable of changing passage cross-section area of the lubricating oil supply passage (44b); and
a negative pressure actuator (71) that drives the regulating valve (61),
wherein the negative pressure actuator (71) is connected to a negative pressure passage that is connected to the suction port (35), and
the negative pressure actuator (71) drives the regulating valve (61), when the brake booster (52) reaches the predetermined negative pressure, using the negative pressure, so as to reduce passage cross-section area of the lubricating oil supply passage (44b).

## Patentansprüche

1. Vakuumpumpenmechanismus, umfassend:
ein Gehäuse (3), das eine Pumpenkammer (2) und einen Ansauganschluss (35) enthält;
einen Rotor (5), der um eine Position drehbar ist, die außermittig zu einer Mitte der Pumpenkammer (2) ist und mit einer Antriebskraft eines Motors (50) gedreht wird;
eine Platte (8), die die Pumpenkammer (2) in eine Vielzahl von Räumen teilt während sie mit dem Rotor (5) gedreht wird;
eine Schmierölversorgungspassage (44, 44a, 44b, 45, 45a, 45b), die die Pumpenkammer (2) mit Schmieröl versorgt; und
eine Ölregulierungseinheit (60, 65, 70)
wobei der Vakuumpumpenmechanismus **dadurch gekennzeichnet ist, dass** der Ansauganschluss (35) mit einem Bremskraftverstärker (52) verbunden ist und dass die Ölregulierungseinheit (60, 65, 70) dazu in der Lage ist die Menge an Schmieröl, die durch die Schmierölversorgungspassage (44, 44a, 44b, 45, 45a, 45b) fließt, auf eine reduzierte Menge oder Null einzustellen, wenn der Bremskraftverstärker (52) einen vorbestimmten Unterdruck erreicht.

2. Vakuumpumpenmechanismus gemäß Anspruch 1, wobei die Ölregulierungseinheit (60) enthält:
ein Regulierungsventil (61), das in der Lage ist eine Passagenquerschnittsfläche der Schmierölversorgungspassage (44b) zu ändern;
einen Antriebsabschnitt (62), der das Regulierungsventil (61) antreibt;
einen Drucksensor (63), der in der Lage ist einen Druck des Bremskraftverstärkers (52) zu erfassen; und
einen Steuerabschnitt (64) der den Antriebsabschnitt (62) steuert, so dass das Regulierungsventil (61) die Passagenquerschnittsfläche der Schmierölversorgungspassage (44b) reduziert, wenn der Sensor (63) erfasst, dass der Bremskraftverstärker (52) den vorbestimmten Unterdruck erreicht.

3. Vakuumpumpenmechanismus gemäß Anspruch 2, wobei
die Schmierölversorgungspassage (44), das Regulierungsventil (61) und der Antriebsabschnitt (62) bei dem Motor (50) angeordnet sind.

4. Vakuumpumpenmechanismus gemäß Anspruch 2, wobei
die Schmierölversorgungspassage (45), das Regulierungsventil (66) und der Antriebsabschnitt (67) bei dem Gehäuse (3) angeordnet sind.

5. Vakuumpumpenmechanismus gemäß Anspruch 1, wobei die Ölregulierungseinheit (70) enthält:
ein Regulierungsventil (61), das in der Lage ist eine Passagenquerschnittsfläche der Schmierölversorgungspassage (44b) zu ändern; und
einen Unterdruckaktuator (71), der das Regulierungsventil (61) antreibt,
wobei der Unterdruckaktuator (71) mit einer Unterdruckpassage verbunden ist, die mit dem Ansauganschluss (35) verbunden ist, und
der Unterdruckaktuator (71) das Regulierungsventil (61) antreibt, wenn der Bremskraftverstärker (52) den vorbestimmten Unterdruck erreicht, unter Verwendung des Unterdrucks, so dass die Passagenquerschnittsfläche der Schmierölversorgungspassage (44b) reduziert wird.

## Revendications

1. Mécanisme de pompe à vide, comprenant :
un logement (3) incluant une chambre à pompe (2) et un port d'aspiration (35) ;
un rotor (5) qui est rotatif sur une position étant excentrique avec un centre de la chambre à pompe (2) et est tourné avec une force d'entraînement d'un moteur (50) ;
une pale (8) qui divise la chambre à pompe (2) en une pluralité d'espaces étant tournés avec le rotor (5) ;
un passage d'alimentation d'huile lubrifiante (44, 44a, 44b, 45, 45a, 45b) qui fournit de l'huile lubrifiante à la chambre à pompe (2) ; et
une unité de régulation de l'huile (60, 65, 70),
le mécanisme de pompe à vide étant **caractérisé en ce que** le port d'aspiration (35) est connecté à un servofrein (52) et que l'unité de régulation de l'huile (60, 65, 70) est capable d'ajuster une quantité d'huile lubrifiante s'écoulant à travers le passage d'alimentation d'huile lubrifiante (44, 44a, 44b, 45, 45a, 45b) à une quantité réduite ou à zéro lorsque le servofrein (52) atteint une pression négative prédéterminée.

2. Mécanisme de pompe à vide selon la revendication 1, dans lequel l'unité de régulation de l'huile (60) inclut :
une soupape de régulation (61) capable de modifier l'aire transversale de passage du passage d'alimentation d'huile lubrifiante (44b) ;
une partie d'entraînement (62) qui entraîne la soupape de régulation (61) ;
un capteur de pression (63) capable de détecter une pression du servofrein (52) ; et
une partie de commande (64) qui commande la partie d'entraînement (62) de façon à ce que la soupape de régulation (61) réduise l'aire transversale de passage du passage d'alimentation d'huile lubrifiante (44b) lorsque le capteur de pression (63) détecte que le servofrein (52) atteint la pression négative prédéterminée.

3. Mécanisme de pompe à vide selon la revendication 2, dans lequel
le passage d'alimentation d'huile lubrifiante (44), la soupape de régulation (61) et la partie d'entraînement (62) sont agencés sur le moteur (50).

4. Mécanisme de pompe à vide selon la revendication 2, dans lequel
le passage d'alimentation d'huile lubrifiante (45), la soupape de régulation (66) et la partie d'entraînement (67) sont agencés dans le logement (3).

5. Mécanisme de pompe à vide selon la revendication 1, dans lequel l'unité de régulation de l'huile (70) inclut :
une soupape de régulation (61) capable de modifier l'aire transversale de passage du passage d'alimentation d'huile lubrifiante (44b) ; et
un déclencheur de pression négative (71) qui entraîne la soupape de régulation (61),
dans lequel le déclencheur de pression négative (71) est connecté à un passage de pression négative qui est connecté au port d'aspiration (35), et
le déclencheur de pression négative (71) entraîne la soupape de régulation (61), lorsque le servofrein (52) atteint la pression négative prédéterminée, en utilisant la pression négative, de façon à réduire l'aire transversale de passage du passage d'alimentation d'huile lubrifiante (44b).
